# EUROPEAN PATENT APPLICATION

(11) **EP 2 996 189 A1**
(43) Date of publication of application: **16.03.2016**
(21) Application number: 15787121.1
(22) Date of filing: 08.07.2015
(51) Int. Cl.: H01M 10/0587, H01M 2/26, H01M 2/12, H01M 2/04, H01M 2/08

(54) **HOLLOW-TYPE SECONDARY BATTERY**

(30) Priority: 14.07.2014 KR 20140088175; 03.04.2015 KR 20150047178
(71) Applicant: Orange Power Ltd., Daejeon 305-509 (KR)
(72) Inventor: HONG, Young Jin, Daejeon 305-756 (KR); LEE, Young Jae, Daejeon 305-722 (KR); LEE, Sung Keun, Daejeon 305-739 (KR); KANG, Soon Sun, Seoul 152-837 (KR); KIM, Kyung Ho, Seongnam-si Gyeonggi-do 463-815 (KR)
(74) Representative: Isarpatent
(86) International application number: PCT/KR2015/007052
(87) International publication number: WO 2016/010294

(57) **Abstract**

The present invention relates to a hollow core secondary battery, and more particularly, to a hollow core secondary battery capable of quickly exhausting internal heat of a battery to the outside of the battery and capable of automatically shorting a battery when an internal pressure of the battery abnormally increases.

The hollow core secondary battery according to the present invention includes an electrode assembly comprising a pair of electrode plates and a separator disposed between the pair of electrode plates, an outer container in which the electrode assembly is received, a hollow inner container inserted into a central portion of the electrode assembly, a first terminal assembly assembled at a top portion of the outer container, a top end portion of the inner container inserted into the first terminal assembly, and a second terminal assembly assembled at a bottom portion of the outer container and having a central portion into which a bottom end portion of the inner container is inserted.

## Description

### [Technical Field]

The present invention relates to a hollow core secondary battery, and more particularly, to a hollow core secondary battery capable of quickly exhausting internal heat of a battery to the outside of the battery and capable of automatically shorting a battery when an internal pressure of the battery abnormally increases.

### [Background Art]

Technological development and increased demand for mobile devices have led to a rapid increase in the demand for secondary batteries as energy sources. Among the secondary batteries, lithium secondary batteries having a high energy density and a high discharging voltage are variously developed and widely used.

As application fields and products of secondary batteries have been various, kinds of the secondary batteries have also been various to provide suitable power and capacity. For example, one or several small and light secondary batteries (unit batteries) may be used in each of a small mobile device (e.g., a portable phone, a personal digital assistant (PDA), a digital camera, or a notebook computer) to satisfy small, light and thin characteristics of the small mobile device.

These secondary batteries may be classified into cylinder-type batteries, quadrangle-type batteries, and pouch-type batteries, according to their external and internal structural characteristics. In addition, these secondary batteries may be classified into jelly-roll type (wrap-type) batteries and stack-type batteries, according to a structural characteristic of an electrode assembly of a positive electrode/a separation layer/a negative electrode.

However, since these conventional secondary batteries have a closed internal structure, heat generated from the insides of the conventional secondary batteries may not be quickly exhausted to the outsides thereof.

In addition, a current-interrupting device used in the conventional secondary battery may be configured such that a welded portion is separated from an external terminal or an electrode assembly to interrupt a current when an internal pressure of a battery rises by overcharging or an external impact. However, if the current-interrupting device is applied to a high-power battery such as an energy storage system (ESS) or an automotive battery, it needs a lot of strong welded points to maintain current density of the welded portion. Thus, it is difficult to apply the current-interrupting device to the high-power battery because of its difficult installation work and long installation time.

### [Disclosure of Invention]

### [Technical Problem]

Embodiments of the present invention may provide a hollow core secondary battery capable of quickly exhausting heat generated from an electrode assembly to the outside thereof.

Embodiments of the present invention may also provide a hollow core secondary battery capable of automatically shorting the inside thereof, when internal pressure of the battery rises to a certain pressure or more.

### [Technical Solution]

In an aspect, a hollow core secondary battery may include: an electrode assembly including a pair of electrode plates and a separator disposed between the pair of electrode plates; an outer container in which the electrode assembly is received; an inner container inserted into a central portion of the electrode assembly, the inner container being hollow; a first terminal assembly assembled at a top portion of the outer container, the first terminal assembly into which a top end portion of the inner container is inserted; and a second terminal assembly assembled at a bottom portion of the outer container, the second terminal assembly having a central portion into which a bottom end portion of the inner container is inserted.

In an embodiment, the first terminal assembly may include: a first terminal portion; a first gasket receiving the first terminal portion to insulate the first terminal portion; a first cover disposed under the first gasket so as to be coupled to the outer container; and a first lead plate electrically connected to a top surface of the electrode assembly. The second terminal assembly may include: a second terminal portion; a second gasket receiving the second terminal portion to insulate the second terminal portion; a second cover disposed on the second gasket so as to be coupled to the outer container; and a second lead plate electrically connected to a bottom surface of the electrode assembly.

In an embodiment, the first terminal portion may include: a first terminal plate; a first inner terminal formed on a top surface of the first terminal plate, the first inner terminal having a first hole into which the inner container is inserted; a first outer terminal formed on an edge of the top surface of the first terminal plate to surround the first inner terminal; and a first terminal tap formed on a bottom surface of the first terminal plate.

In an embodiment, the first gasket may include: a first gasket plate; a first inner gasket formed on a top surface of the first gasket plate, the first inner gasket having a second hole connected to the first hole; a first outer gasket formed on an edge of the top surface of the first gasket plate to surround the first inner gasket; and a first terminal tap gasket formed on a bottom surface of the first gasket plate, the first terminal tap gasket surrounding and insulating the first terminal tap inserted in the first terminal tap gasket.

In an embodiment, the first cover may include: a third hole connected to the second hole; and a first through-hole into which the first terminal tap is inserted.

In an embodiment, the first lead plate may include: a fourth hole connected to the third hole; a second through-hole into which the first terminal tap is inserted; and a first current-interrupting member of which a central portion is expanded upward by pressure so as to come in contact with the first cover when internal temperature and pressure of the hollow core secondary battery reach predetermined values.

In an embodiment, a first lower gasket for insulation may be installed between the first cover and the first lead plate. The first lower gasket may include: a fifth hole connected to the third and fourth holes for the insertion of the inner container; a third through-hole into which the first terminal tap is inserted; and a first insertion hole through which the central portion of the first current-interrupting member expanded upward by the pressure passes.

In an embodiment, the second terminal portion may include: a second terminal plate; a second inner terminal formed on a top surface of the second terminal plate, the second inner terminal having a sixth hole into which the inner container is inserted; a second outer terminal formed on an edge of the top surface of the second terminal plate to surround the second inner terminal; and a second terminal tap formed between the second inner terminal and the second outer terminal so as to be electrically connected to the electrode assembly.

In an embodiment, the second gasket may include: a second gasket plate; a second inner gasket formed on a bottom surface of the second gasket plate, the second inner gasket having a seventh hole connected to the sixth hole; a second outer gasket formed on an edge of the bottom surface of the second gasket plate to surround the second inner gasket; a joining portion formed to protrude from the bottom surface of the second gasket plate between the second inner gasket and the second outer gasket, the joining portion inserted into between the second inner terminal and the second outer terminal when a plurality of the hollow core secondary batteries are connected in series to each other; and a second terminal tap gasket formed to extend from a top surface of the second gasket plate, the second terminal tap gasket having a hollow structure having opened top and bottom ends in such a way that the second terminal tap is inserted into the second terminal tap gasket.

In an embodiment, the second cover may be disposed on the second gasket, and the second cover may include: an eighth hole connected to the seventh hole; and a fourth through-hole into which the second terminal tap is inserted.

In an embodiment, the second lead plate may include: a ninth hole connected to the eighth hole; a fifth through-hole into which the second terminal tap is inserted; and a second current-interrupting member of which a central portion is expanded downward by pressure so as to come in contact with the second cover when internal temperature and pressure of the hollow core secondary battery reach predetermined values.

In an embodiment, a second lower gasket for insulation may be installed between the second cover and the second lead plate. The second lower gasket may include: a tenth hole connected to the eighth and ninth holes for the insertion of the inner container; a sixth through-hole into which the second terminal tap is inserted; and a second insertion hole through which the central portion of the second current-interrupting member expanded downward by the pressure passes.

In an embodiment, the hollow core secondary battery may further include: first and second insulation boards on top and bottom surfaces of the electrode assembly. The first and second insulation boards may include: first and second insulation-board plates; first and second insulation-board through-holes formed in central portions of the first and second insulation-board plates, the inner container inserted into the first and second insulation-board through-holes; first and second receiving portions extending from outer circumferences of one-sides of the first and second insulation-board plates to receive the first and second terminal assemblies; and third and fourth receiving portions extending from outer circumferences of another-sides of the first and second insulation-board plates to receive an upper portion and a lower portion of the electrode assembly.

In another aspect, a hollow core secondary battery may include: an electrode assembly including a pair of electrode plates and a separator disposed between the pair of electrode plates; an outer container in which the electrode assembly is received; third and fourth covers coupled to one side and another side of the outer container, respectively; a third lead plate installed between one side of the electrode assembly and the third cover so as to be electrically connected to the electrode assembly; a fourth lead plate installed between another side of the electrode assembly and the fourth cover so as to be electrically connected to the electrode assembly; and first and second short-circuit portions installed in first and second openings formed in the third and fourth lead plates, respectively, the first and second short-circuit portions elastically transformed to come in contact with the third and fourth covers, respectively, when internal pressure of the outer container rises.

In an embodiment, the first short-circuit portion may include: a first elastic member installed in the first opening to seal the first opening; and a first connector formed on a circumference portion of the first short-circuit portion so as to be in contact with the third lead plate. The second short-circuit portion may include: a second elastic member installed in the second opening to seal the second opening; and a second connector formed on a circumference portion of the second short-circuit portion so as to be in contact with the fourth lead plate.

In an embodiment, central portions of the first and second elastic members may be reversed to have hemisphere shapes being in contact with the third and fourth covers, respectively, when internal pressure of the battery increases.

In an embodiment, the first short-circuit portion may further include: a third insulator surrounding an outer circumference surface of the first connector to insulate the third cover and the first connector from each other, and the second short-circuit portion may further include: a fourth insulator surrounding an outer circumference surface of the second connector to insulate the fourth cover and the second connector from each other.

In an embodiment, first and second protrusions may be formed on inner surfaces of the third and fourth insulators, respectively. First and second joining grooves, into which the first and second protrusions are inserted, respectively, may be formed in outer circumference surfaces of the first and second connectors.

In an embodiment, first and second depressed regions having predetermined depths may be formed in the third and fourth covers, respectively, and one-end portions of the third and fourth insulators may be inserted into the first and second depressed regions, respectively.

In an embodiment, first and second plain portions, each of which has positive polarity or negative polarity, may be formed on both ends of the electrode assembly, respectively. First and second tap plates of a conductive material may be coupled to the first and second plain portions, respectively, and the third and fourth lead plates may be connected to the first and second tap plates, respectively.

In an embodiment, a first tap of a conductive material may be installed between the first tap plate and the third lead plate so as to be in contact with the first tap plate and the third lead plate, and a second tap of a conductive material may be installed between the second tap plate and the fourth lead plate so as to be in contact with the second tap plate and the fourth lead plate.

In an embodiment, first and second insulators may be installed on a top surface of the first tap plate and a bottom surface of the second tap plate, respectively, and insertion holes may be respectively formed in the first and second insulators such that the first and second taps are in contact with the first and second tap plates.

### [Advantageous Effects]

Since a hollow region penetrates the inside of the hollow core secondary battery so as to be exposed outwardly, the hollow core secondary battery according to the present invention may quickly exhaust heat generated from the electrode assembly to the outside.

The hollow core secondary battery according to the present invention automatically induces internal short circuit of the battery when internal pressure of the battery increases to be equal to or more than a predetermined value, and thus it is possible to secure stability when an abnormal case occurs by overcharging, etc.

In addition, in the hollow core secondary battery according to the present invention, the first and second short-circuit portions inducing the internal short circuit of the battery may be assembled without welding, so it is possible to reduce a working time necessary to assembly and installation work.

### [Brief Description of Drawings]

FIG. 1 is a perspective view illustrating a hollow core secondary battery according to a first embodiment of the present invention.
FIG. 2 is an exploded perspective view illustrating the hollow core secondary battery according to the first embodiment of the present invention.
FIG. 3 is a perspective view illustrating upper and lower structures of a first terminal portion according to the present invention.
FIG. 4 is a perspective view illustrating upper and lower structures of a first gasket according to the present invention.
FIG. 5 is a perspective view illustrating a structure of a first cover according to the present invention in more detail.
FIG. 6 is a perspective view illustrating upper and lower structures of a first lead plate according to the present invention.
FIG. 7 is a perspective view illustrating a structure of a first lower gasket according to the present invention.
FIG. 8 is a perspective view illustrating upper and lower structures of a second terminal portion according to the present invention.
FIG. 9 is a perspective view illustrating upper and lower structures of a second gasket according to the present invention.
FIG. 10 is a perspective view illustrating a combination structure of the second gasket and the second terminal portion according to the present invention.
FIG. 11 is a perspective view illustrating a structure of a second cover according to the present invention in more detail.
FIG. 12 is a perspective view illustrating upper and lower structures of a second lead plate according to the present invention.
FIG. 13 is a perspective view illustrating a structure of a second lower gasket according to the present invention.
FIG. 14 is a perspective view illustrating structures of first and second insulation boards according to the present invention.
FIG. 15 is a view illustrating a state where the first and second insulation boards are installed in an outer container.
FIGS. 16 to 19 are views illustrating a hollow core secondary battery according to the first embodiment of the present invention, which includes an outer container having a quadrilateral section structure.
FIGS. 20 to 23 are views illustrating a hollow core secondary battery according to the first embodiment of the present invention, which includes an outer container having a hexagonal section structure.
FIG. 24 is a view illustrating hollow core secondary batteries according to the first embodiment of the present invention, which are connected in series to each other.
FIG. 25 is a cross-sectional perspective view illustrating a hollow core secondary battery according to a second embodiment of the present invention.
FIG. 26 is a cross-sectional view illustrating the hollow core secondary battery according to the second embodiment of the present invention.
FIG. 27 is an enlarged view of a portion 'A' of FIG. 25.
FIG. 28 is an enlarged view of a portion 'A' of FIG. 26.
FIG. 29 is an enlarged view of a portion 'B' of FIG. 25.
FIG. 30 is an enlarged view of a portion 'B' of FIG. 26.
FIG. 31 is an exploded perspective view illustrating a first short-circuit portion and a second short-circuit portion according to the present invention.
FIG. 32 is a perspective view illustrating first and second covers according to the present invention in more detail.

### [Best Mode for Carrying out Invention]

Hereinafter, exemplary embodiments of the present invention will be described in detail with reference to the accompanying drawings. It should be noted that the same elements are indicated by the same reference numerals or the same reference designators even though shown in different drawings. In addition, in explanation of the present invention, the descriptions to the elements and functions of related arts may be omitted if they obscure the subjects of the present invention.

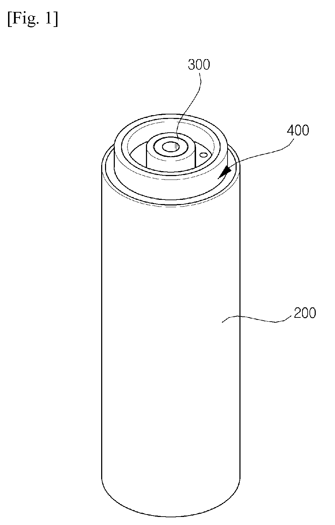

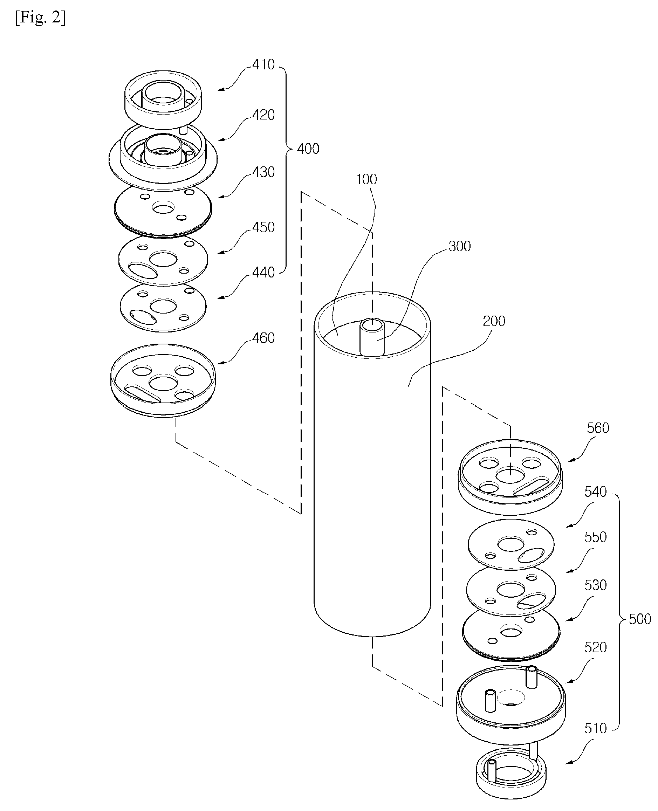

FIG. 1 is a perspective view illustrating a hollow core secondary battery according to a first embodiment of the present invention, and FIG. 2 is an exploded perspective view illustrating the hollow core secondary battery according to the first embodiment of the present invention.

As illustrated in FIGS. 1 and 2, a hollow core secondary battery according to the present invention includes an electrode assembly 100, an outer container 200, an inner container 300, a first terminal assembly 400, and a second terminal assembly 500.

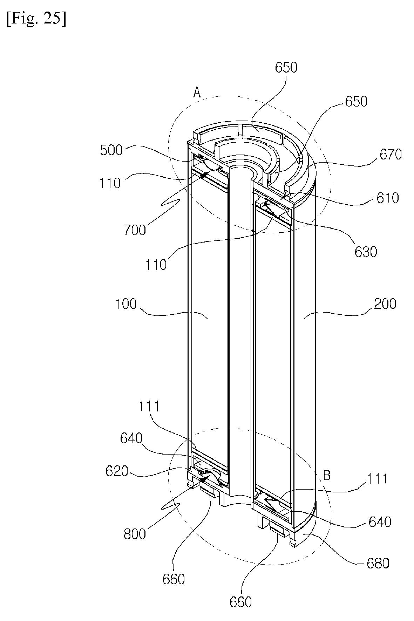

The electrode assembly 100 includes a pair of electrode plates of which each has positive polarity or negative polarity, and a separator disposed between the pair of electrode plates. The separator is wrapped in a jelly-roll shape. First and second plain portions 110 and 111, which are not coated with an active material, are formed on both ends of the electrode assembly 100 (see FIG. 25). The first plain portion 110 is formed on the electrode plate having the positive polarity, so the first plain portion 110 has the positive polarity. The second plain portion 111 is formed on the electrode plate having the negative polarity, so the second plain portion 111 has the negative polarity.

If the polarities of the electrode plates are changed, the polarities of the first and second plain portions 110 and 111 may also be changed. Hereinafter, the first plain portion 110 having the positive polarity and the second plain portion 111 having the negative polarity will be described as an example.

The outer container 200 has a structure of which both ends are opened, and the electrode assembly 100 is received within the outer container 200. The outer container 200 is formed of a metal material such as aluminum, an aluminum alloy, or steel plated with nickel.

The inner container 300 is inserted in a central region of the electrode assembly 100 to prevent modification of the electrode assembly 100. The inner container 300 has a hollow cylindrical structure to quickly exhaust heat generated from the electrode assembly 100 to the outside.

The first terminal assembly 400 is assembled at a top portion of the outer container 200 to seal the outer container 200 and is connected to the electrode assembly 100 to allow a current to flow to an external device. In addition, a top end portion of the inner container 300 is inserted in a central region of the first terminal assembly 400. Thus, since a hollow region of the inner container 300 penetrates the first terminal assembly 400 so as to be exposed outwardly, the heat generated from the electrode assembly 100 is quickly exhausted to the outside through the hollow region, as described above.

The first terminal assembly 400 includes a first terminal portion 410, a first gasket 420, a first cover 430, and a first lead plate 440.

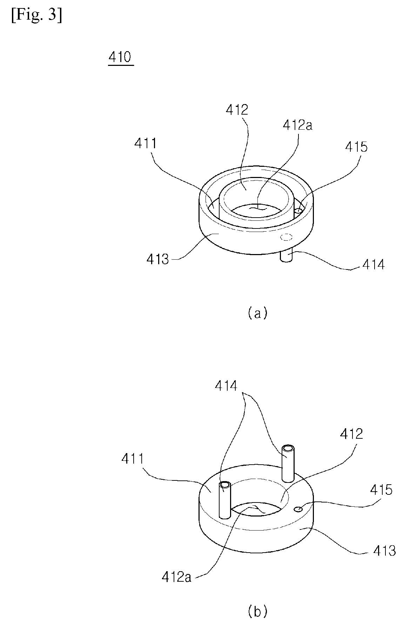

FIG. 3 is a perspective view illustrating upper and lower structures of a first terminal portion according to the present invention.

As illustrated in FIG. 3, the first terminal portion 410 includes a first terminal plate 411, a first inner terminal 412 formed on a top surface of the first terminal plate 411 and having a first hole 412a into which the inner container 300 is inserted, a first outer terminal 413 formed on an edge of the top surface of the first terminal plate 411 to surround the first inner terminal 412, and a first terminal tap 414 formed on a bottom surface of the first terminal plate 411.

The first terminal tap 414 may penetrate the first gasket 420, the first cover 430, a first lower gasket 450, the first lead plate 440 and the first insulation board 460, which will be described below, so as to be electrically connected to the electrode assembly 100. If the first terminal tap 414 has a structure capable of connecting the first terminal portion 410 to the electrode assembly 100, a shape of the first terminal tap 414 is not limited to a specific shape.

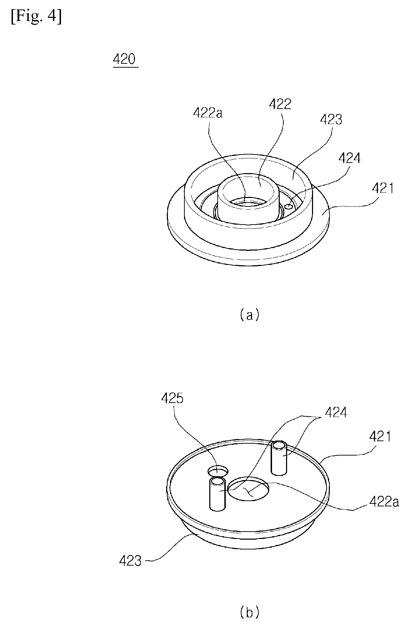

FIG. 4 is a perspective view illustrating upper and lower structures of a first gasket according to the present invention.

The first gasket 420 receives the first terminal portion 410 to insulate the first terminal portion 410.

As illustrated in FIG. 4, the first gasket 420 includes a first gasket plate 421, a first inner gasket 422 formed on a top surface of the first gasket plate 421 and having a second hole 422a connected to the first hole 412a, a first outer gasket 423 formed on an edge of the top surface of the first gasket plate 421 to surround the first inner gasket 422, and a first terminal tap gasket 424 formed on a bottom surface of the first gasket plate 421. The first terminal tap 414 is inserted into the inside of the first terminal tap gasket 424.

An outer surface of the first inner gasket 422 comes in contact with an inner surface of the first inner terminal 421, so the first inner gasket 422 insulates the first inner terminal 412. The first outer gasket 423 surrounds an outer surface of the first outer terminal 413 to insulate the first outer terminal 413. In addition, the first terminal tap gasket 424 surrounds and insulates the first terminal tap 414 inserted therein.

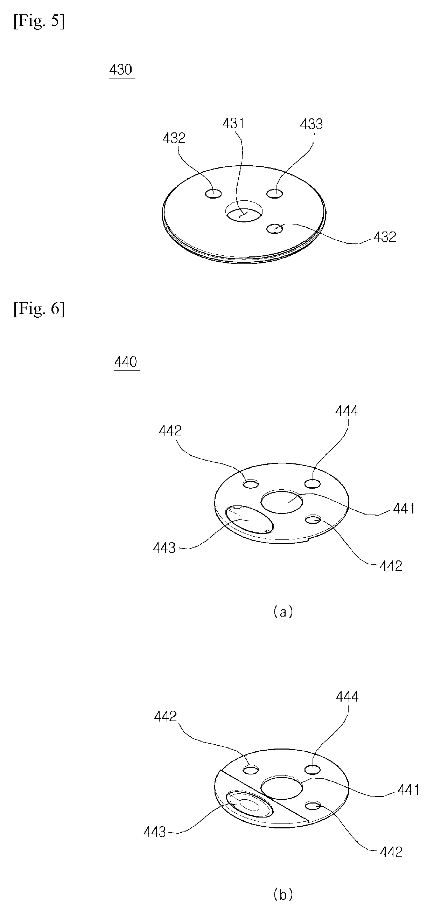

FIG. 5 is a perspective view illustrating a structure of a first cover according to the present invention in more detail.

The first cover 430 is disposed under the first gasket 420 so as to be coupled to the outer container 200. As illustrated in FIG. 5, the first cover 430 includes a third hole 431 connected to the second hole 422a, and a first through-hole 432 into which the first terminal tap 414 is inserted.

The first lead plate 440 is formed of a conductive material and is electrically connected to a top surface of the electrode assembly 100. In detail, the first lead plate 440 may be bonded to the first plain portion 110 of the electrode assembly 100 by ultrasonic welding or laser welding.

FIG. 6 is a perspective view illustrating upper and lower structures of a first lead plate according to the present invention.

As illustrated in FIG. 6, the first lead plate 440 includes a fourth hole 441 connected to the third hole 431, and a second through-hole 442 into which the first terminal tap 414 is inserted. A portion of the first lead plate 440 may cut such that an electrolyte solution may easily flow into the inside of the battery.

In addition, the first lead plate 440 may further include a first current-interrupting member 443. If internal temperature and pressure of the battery reach predetermined values (e.g., operating reference temperature: 125°C, operating reference pressure: 18.5kgf/cm²), a central portion of the first current-interrupting member 443 is expanded upward by the pressure so as to come in contact with the first cover 430. The first current-interrupting member 443 and a second current-interrupting member 543 to be described later allow a current to flow to the outer container 200, thereby shorting the inside of the battery.

Meanwhile, the first lower gasket 450 for insulation is installed between the first cover 430 and the first lead plate 440.

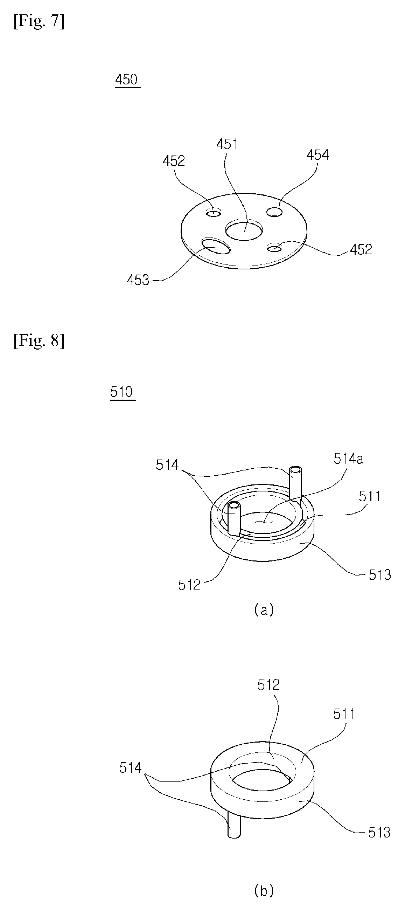

FIG. 7 is a perspective view illustrating a structure of a first lower gasket according to the present invention.

The first lower gasket 450 includes a fifth hole 451 connected to the third and fourth holes 431 and 441 for the insertion of the inner container 300, and a third through-hole 452 into which the first terminal tap 414 is inserted.

In addition, the first lower gasket 450 may further include a first insertion hole 453 through which the central portion of the first current-interrupting member 443 expanded upward by the pressure passes. The central portion of the first current-interrupting member 443 passes through the first insertion hole 453 so as to come in contact with the first cover 430 when expanded.

Reference numerals 415, 425, 433, 444, and 454 not described in the drawings are inlets for injecting the electrolyte solution which are respectively formed in the first terminal portion 410, the first gasket 420, the first cover 430, the first lead plate 440, and the first lower gasket 450 so as to be connected to each other.

The second terminal assembly 500 is assembled at a bottom portion of the outer container 200 to seal a bottom surface of the outer container 200 and is connected to the electrode assembly 100 described above to allow a current to flow to the external device.

In addition, a bottom end portion of the inner container 300 is inserted into a central region of the second terminal assembly 500. Thus, since the top end portion and the bottom end portion of the inner container 300 penetrate the first and second terminal assemblies 400 and 500 so as to be exposed outwardly, the heat generated from the electrode assembly 100 is quickly exhausted to the outside through the hollow region of the inner container 300.

The second terminal assembly 500 includes a second terminal portion 510, a second gasket 520, a second cover 530, and a second lead plate 540.

FIG. 8 is a perspective view illustrating upper and lower structures of a second terminal portion according to the present invention.

As illustrated in FIG. 8, the second terminal portion 510 includes a second terminal plate 511, a second inner terminal 512 formed on a top surface of the second terminal plate 511 and having a sixth hole 512a into which the inner container 300 is inserted, a second outer terminal 513 formed on an edge of the top surface of the second terminal plate 511 to surround the second inner terminal 512, and a second terminal tap 514 formed between the second inner terminal 512 and the second outer terminal 513.

The second terminal tap 514 and the second terminal plate 511 may be formed in one body. The second terminal tap 514 may penetrate the second gasket 520, the second cover 530, a second lower gasket 550 and the second lead plate 540, which will be described below, so as to be electrically connected to the electrode assembly 100.

If the second terminal tap 514 has a structure capable of connecting the second terminal portion 510 to the electrode assembly 100, a shape of the second terminal tap 514 is not limited to a specific shape. For example, the second terminal tap 514 may have a cylindrical shape or a shape surrounding the sixth hole 512a.

The second gasket 520 receives the second terminal portion 510 to insulate the second terminal portion 510.

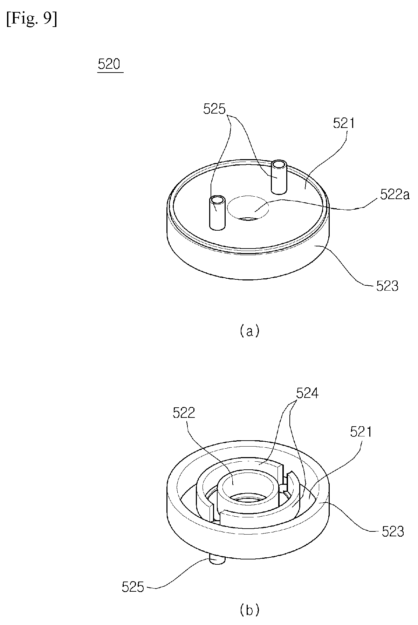

FIG. 9 is a perspective view illustrating upper and lower structures of a second gasket according to the present invention.

As illustrated in FIG. 9, the second gasket 520 includes a second gasket plate 521, a second inner gasket 522 formed to extend from a bottom surface of the second gasket plate 521 and having a seventh hole 522a connected to the sixth hole 512a, a second outer gasket 523 formed on an edge of the bottom surface of the second gasket plate 521 to surround the second inner gasket 522, a joining portion 524 formed to protrude from the bottom surface of the second gasket plate 521 between the second inner gasket 522 and the second outer gasket 523, and a second terminal tap gasket 525 formed to extend from a top surface of the second gasket plate 521. The second terminal tap gasket 525 has a hollow structure having opened top and bottom ends such that the second terminal tap 514 is inserted into the second terminal tap gasket 525.

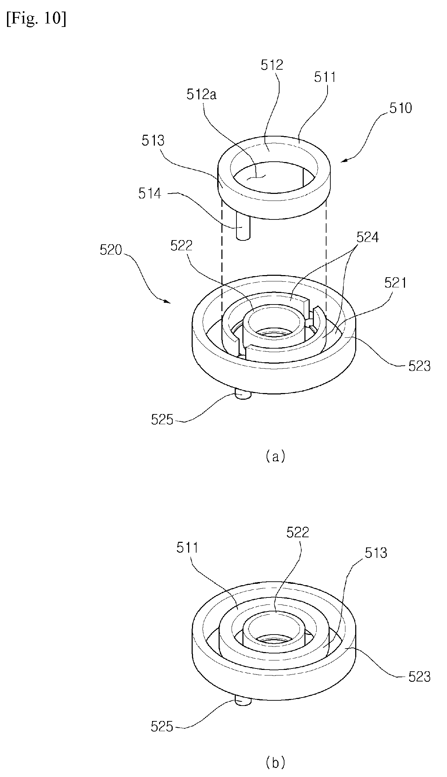

FIG. 10 is a perspective view illustrating a combination structure of the second gasket and the second terminal portion according to the present invention.

Thus, when the joining portion 524 is inserted into between the second inner terminal 512 and the second outer terminal 513 to couple the second terminal portion 510 to the second gasket 520 as illustrated in a reference designator (a) of FIG. 10, the second inner gasket 522 is located to be inserted in the sixth hole 512a of the second inner terminal 512 as illustrated in a reference designator (b) of FIG. 10. In addition, as illustrated in the reference designator (b) of FIG. 10, the second outer gasket 523 is spaced apart from the second outer terminal 513 by a predetermined distance to surround an outer surface of the second outer terminal 513, and the second terminal tap 514 is located to be inserted in the inside of the second terminal tap gasket 525.

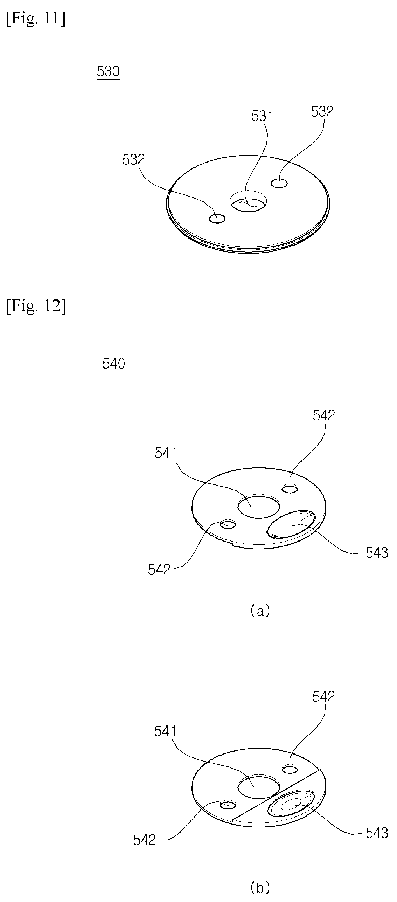

FIG. 11 is a perspective view illustrating a structure of a second cover according to the present invention in more detail.

The second cover 530 is disposed on the second gasket 520 and is coupled to the outer container 200 by ultrasonic or laser welding. As illustrated in FIG. 11, the second cover 530 includes an eighth hole 531 connected to the seventh hole 522a, and a fourth through-hole 532 into which the second terminal tap 514 is inserted.

The second lead plate 540 is formed of a conductive material and is electrically connected to a bottom surface of the electrode assembly 100. In detail, the second lead plate 540 may be bonded to the second plain portion 111 of the electrode assembly 100 by ultrasonic welding or laser welding.

FIG. 12 is a perspective view illustrating upper and lower structures of a second lead plate according to the present invention.

As illustrated in FIG. 12, the second lead plate 540 includes a ninth hole 541 connected to the eighth hole 531, and a fifth through-hole 542 into which the second terminal tap 514 is inserted.

In addition, the second lead plate 540 may further include a second current-interrupting member 543. If the internal temperature and pressure of the battery reach the predetermined values (e.g., operating reference temperature: 125°C, operating reference pressure: 18.5kgf/cm²), a central portion of the second current-interrupting member 543 is expanded downward by the pressure so as to come in contact with the second cover 530. Thus, when the first current-interrupting member 443 described above and the second current-interrupting member 543 are expanded at the same time by the pressure so as to come in contact with the first cover 430 and the second cover 530, respectively, a short circuit occurs to interrupt the function of the secondary battery. As a result, it is possible to prevent safety accidents (e.g., over-heating or ignition) from happening.

Meanwhile, the second lower gasket 550 for insulation is installed between the second cover 530 and the second lead plate 540.

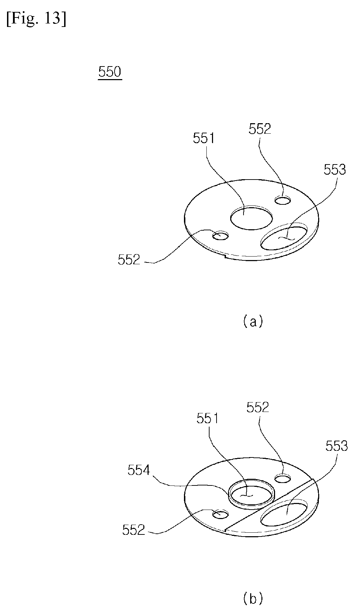

FIG. 13 is a perspective view illustrating a structure of a second lower gasket according to the present invention.

The second lower gasket 550 includes a tenth hole 551 connected to the eighth and ninth holes 531 and 541 for the insertion of the inner container 300, and a sixth through-hole 552 into which the second terminal tap 514 is inserted.

In addition, the second lower gasket 550 may further include a second insertion hole 553 through which the central portion of the second current-interrupting member 543 expanded upward by the pressure passes. The central portion of the second current-interrupting member 543 passes through the second insertion hole 553 so as to come in contact with the second cover 530 when expanded.

A threshold portion 554 extending along a circumference of the tenth hole 551 may be formed on a bottom surface of the second lower gasket 550. The threshold portion 554 is inserted into the eighth hole 531 of the second cover 530 to firmly couple the second lower gasket 550 to the second cover 530.

Meanwhile, the hollow core secondary battery according to the present invention may further include a first insulation board 460 installed on the top surface of the electrode assembly 100, and a second insulation board 560 installed on the bottom surface of the electrode assembly 100.

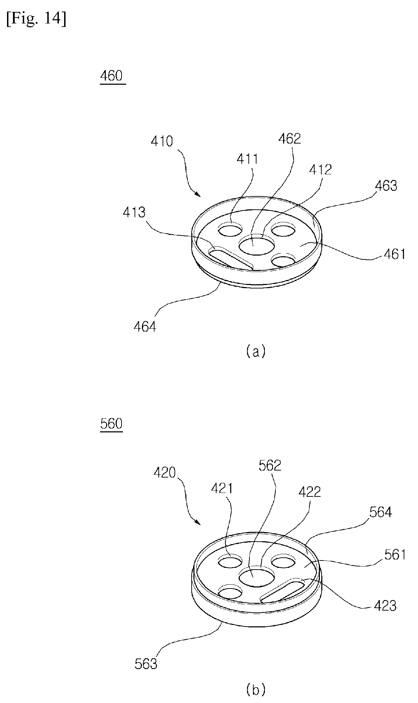

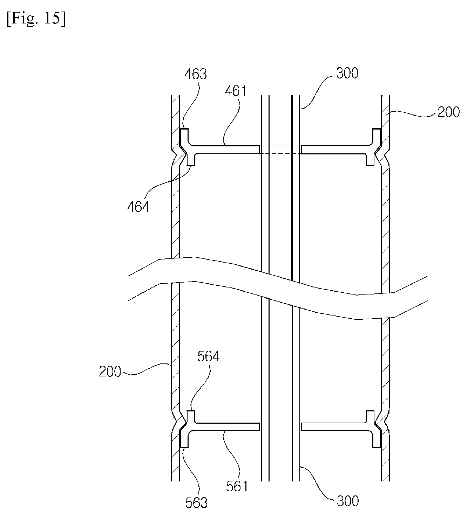

FIG. 14 is a perspective view illustrating structures of first and second insulation boards according to the present invention, and FIG. 15 is a view illustrating a state where the first and second insulation boards are installed in an outer container.

As illustrated in FIG. 14, the first and second insulation boards 460 and 560 include first and second insulation-board plates 461 and 561, first and second insulation-board through-holes 462 and 562 formed in central portions of the first and second insulation-board plates 461 and 561 in such a way that the inner container 300 is inserted into the first and second insulation-board through-holes 462 and 562, first and second receiving portions 463 and 563 extending from outer circumferences of one-sides of the first and second insulation-board plates 461 and 561 to receive the first and second terminal assemblies 400 and 500, and third and fourth receiving portions 464 and 564 extending from outer circumferences of another-sides of the first and second insulation-board plates 461 and 561 to receive an upper portion and a lower portion of the electrode assembly 100.

Thus, as illustrated in FIG. 15, when the first and second insulation boards 460 and 560 are installed in the outer container, the first and second terminal assemblies 400 and 500 are received in the first and second receiving portions 463 and 563, respectively, so it is possible to prevent the first and second lead plates from being in direct contact with the outer container 200. In addition, the upper portion and the lower portion of the electrode assembly 100 are received in the third and fourth receiving portions 464 and 564, respectively, so it is possible to prevent the electrode assembly 100 from being in direct contact with the outer container 200.

Here, diameters of the first and second receiving portions 463 and 563 may be greater than those of the third and fourth receiving portions 464 and 564. In this case, if pressure is applied to form beading portions depressed from the outer container 200 toward the inside of the outer container 200 after the first and second insulation boards 460 and 560 are installed, sidewalls of the first and second receiving portions 463 and 563 may be supported by the beading portions to firmly fix the first and second insulation boards 460 and 560 in the inside of the outer container 200.

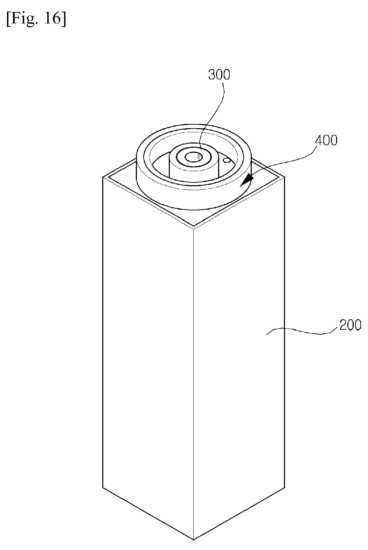

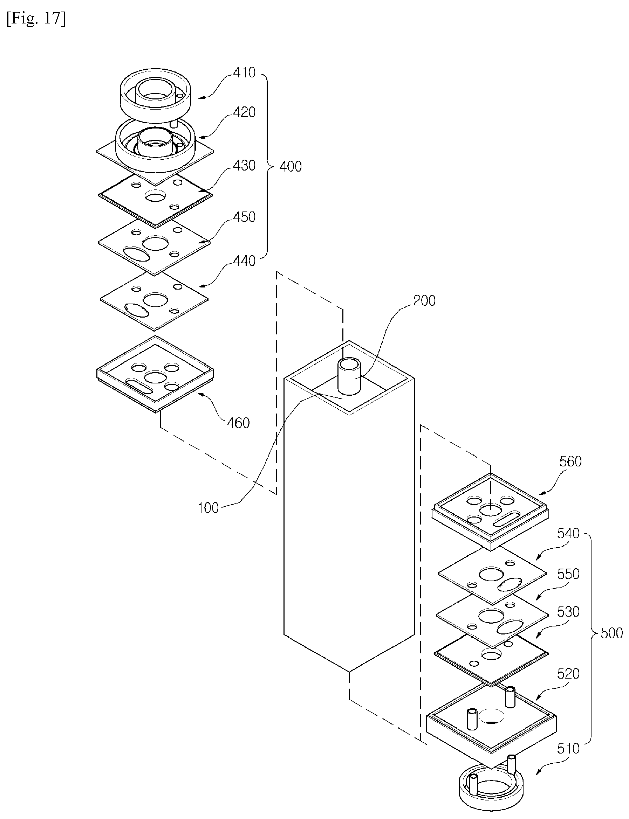

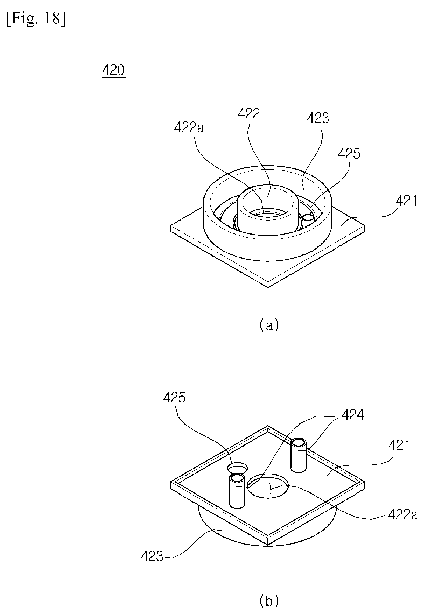

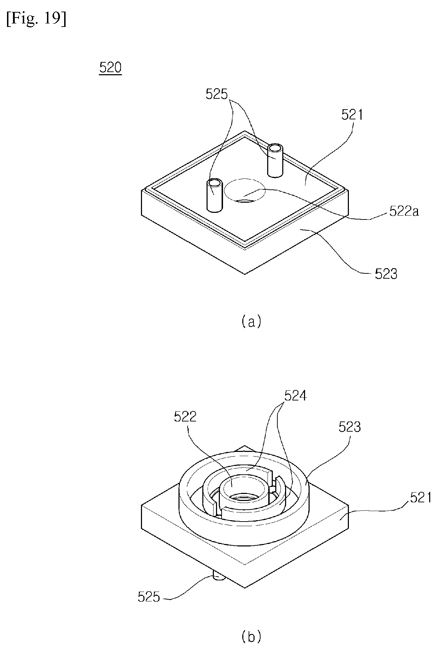

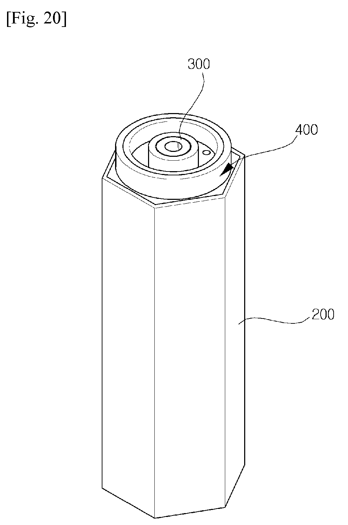

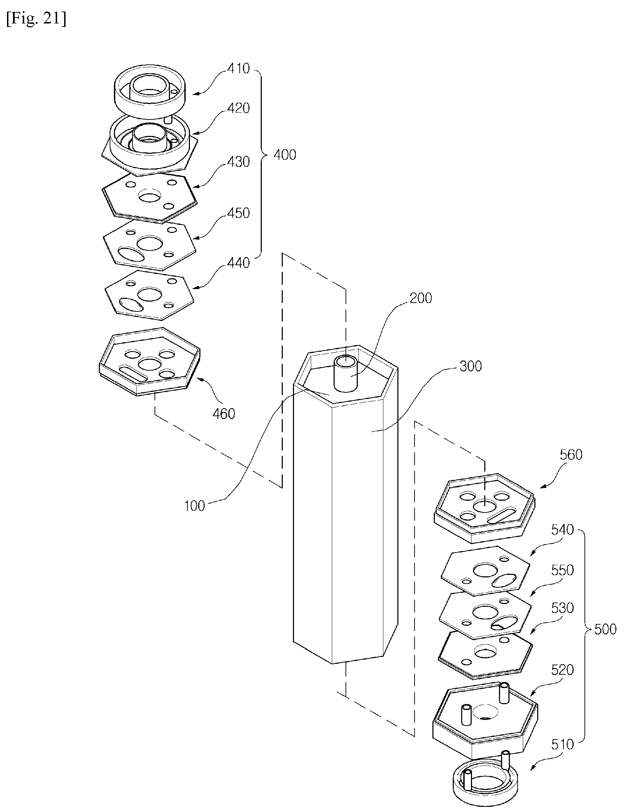

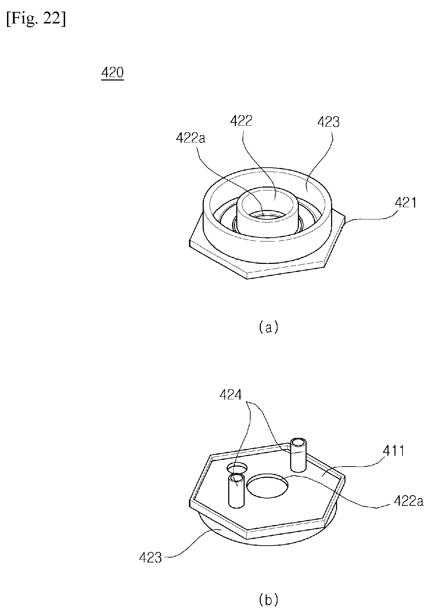

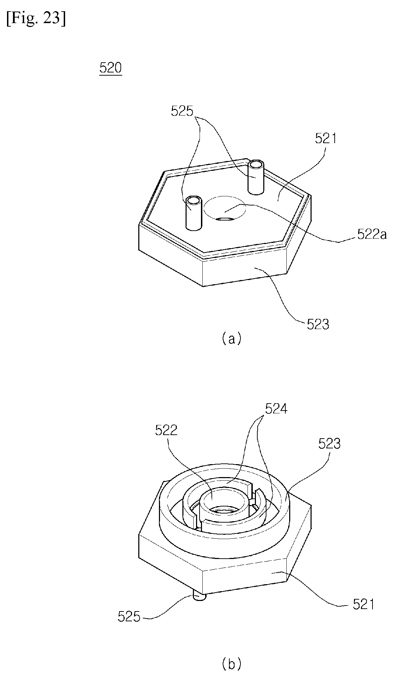

FIGS. 16 to 19 are views illustrating a hollow core secondary battery according to the first embodiment of the present invention, which includes an outer container having a quadrilateral section structure. FIGS. 20 to 23 are views illustrating a hollow core secondary battery according to the first embodiment of the present invention, which includes an outer container having a hexagonal section structure.

On the other hand, the structures of the first and second terminal assemblies 400 and 500 and the first and second insulation boards 460 and 560 described above may be variously modified according to the shape of the outer container 200 or needs, as illustrated in FIGS. 16 to 23.

For example, as illustrated in FIGS. 16 to 19, if the outer container 200 has a quadrilateral section, the first and second gasket plates 421 and 521, the first and second covers 430 and 530, the first and second lead plates 440 and 540, the first and second lower gaskets 450 and 550, and the first and second insulation-board plates 461 and 561 also have quadrilateral sections.

Also, as illustrated in FIGS. 20 to 23, if the outer container 200 has a hexagonal section, the first and second gasket plates 421 and 521, the first and second covers 430 and 530, the first and second lead plates 440 and 540, the first and second lower gaskets 450 and 550, and the first and second insulation-board plates 461 and 561 also have hexagonal sections.

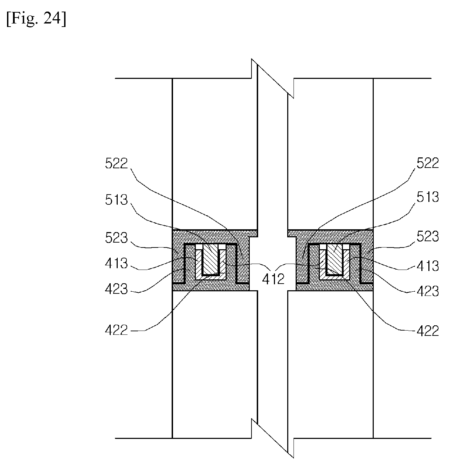

FIG. 24 is a view illustrating hollow core secondary batteries according to the first embodiment of the present invention, which are connected in series to each other.

Meanwhile, the first terminal assembly 400 may be combined with the second terminal assembly 500 to connect a plurality of the hollow core secondary batteries in series to each other.

To achieve this, the first gasket 420 coupled to the first terminal portion 410 is coupled to the second gasket 520 coupled to the second terminal portion 510, as illustrated in FIG. 24.

At this time, the first outer gasket 423 and the first outer terminal 413 are inserted between the second outer gasket 523 and the second outer terminal 513, and the first inner terminal 412 and the first inner gasket 422 are inserted between the second outer terminal 513 and the second inner gasket 522.

When the first and second terminal assemblies 400 and 500 are coupled to each other as described above, the hollow core secondary batteries are connected in series to each other without an additional connection device. In addition, the inner containers 300 of the secondary batteries are connected to each other in the state where the secondary batteries are connected in series to each other, and thus the heat generated from the secondary batteries may be quickly exhausted to the outside through the hollow regions of the inner containers 300.

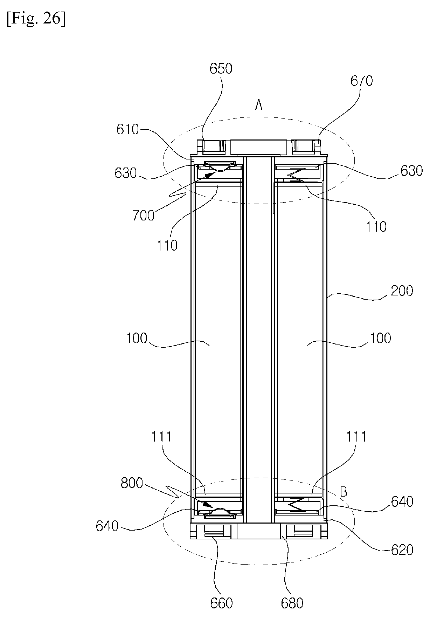

FIG. 25 is a cross-sectional perspective view illustrating a hollow core secondary battery according to a second embodiment of the present invention, and FIG. 26 is a cross-sectional view illustrating the hollow core secondary battery according to the second embodiment of the present invention.

As illustrated in FIGS. 25 and 26, a hollow core secondary battery according to a second embodiment of the present invention may include an electrode assembly 100, an outer container 200, third and fourth covers 610 and 620, third and fourth lead plates 630 and 640, and first and second short-circuit portions 700 and 800.

The electrode assembly 100 includes a pair of electrode plates of which each has positive polarity or negative polarity, and a separator disposed between the pair of electrode plates. The separator is wrapped in a jelly-roll shape.

First and second plain portions 110 and 111 are formed on both ends of the electrode assembly 100. The first plain portion 110 is formed on the electrode plate having the positive polarity, so the first plain portion 110 has the positive polarity. The second plain portion 111 is formed on the electrode plate having the negative polarity, so the second plain portion 111 has the negative polarity. If the polarities of the electrode plates are changed, the polarities of the first and second plain portions 110 and 111 may also be changed.

The outer container 200 has a structure of which both sides are opened, and the electrode assembly 100 is received within the outer container 200. The outer container 200 is formed of a conductive metal material such as aluminum, an aluminum alloy, or steel plated with nickel.

The third and fourth covers 610 and 620 are coupled to one opened side and another opened side of the outer container 200, respectively, so the above mentioned electrode assembly 100 is received within the outer container 200. The third and fourth covers 610 and 620 are also formed of the conductive metal material.

The third lead plate 630 is installed between one side of the electrode assembly 100 and the third cover 610 so as to be electrically connected to the electrode assembly 100. In detail, the third lead plate 630 is electrically connected to the first plain portion 110 of the electrode assembly 100.

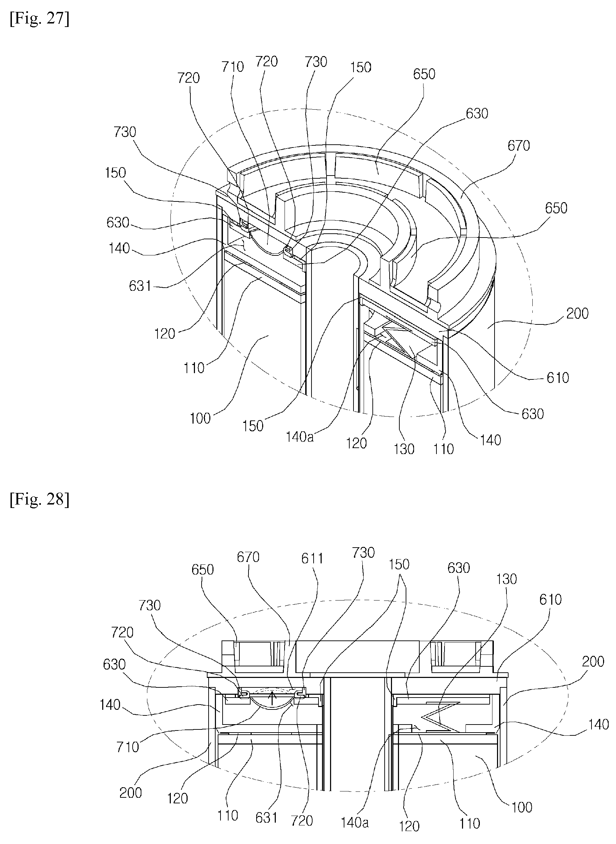

FIG. 27 is an enlarged view of a portion 'A' of FIG. 25, and FIG. 28 is an enlarged view of a portion 'A' of FIG. 26.

To achieve this, as illustrated in FIG. 27 and 28, a first tap plate 120 of a conductive material is coupled to the first plain portion 110 by welding, etc., and a first tap 130 of a conductive material is installed between the first tap plate 120 and the third lead plate 630. The first tap 130 is in contact with the first tap plate 120 and the third lead plate 630 to electrically connect the first plain portion 110 to the third lead plate 630.

However, the connection structure of the third lead plate 630 and the electrode assembly 100 is not limited to the structure described above. The connection structure may be variously modified such that the first tap 130 is in direct contact with the first plain portion 110.

Meanwhile, a first insulator 140 for insulating the first tap plate 120 and the outer container 200 from each other may be installed on a top surface of the first tap plate 120. In this case, an insertion hole 140a is formed in the first insulator 140 such that the first tap 130 passes through the first insulator 140 so as to be in contact with the first tap plate 120.

In addition, a third gasket 150 for insulating the third cover 610 and the third lead plate 630 from each other may be installed between the third cover 610 and the third lead plate 630. The third gasket 150 may be formed of a material such as polypropylene. In this case, the third cover 610 and the third lead plate 630 are disposed to be opposite to each other with the third gasket 150 interposed therebetween.

The fourth lead plate 640 is installed between another side of the electrode assembly 100 and the fourth cover 620 so as to be electrically connected to the electrode assembly 100. In detail, the fourth lead plate 640 is electrically connected to the second plain portion 111 of the electrode assembly 100.

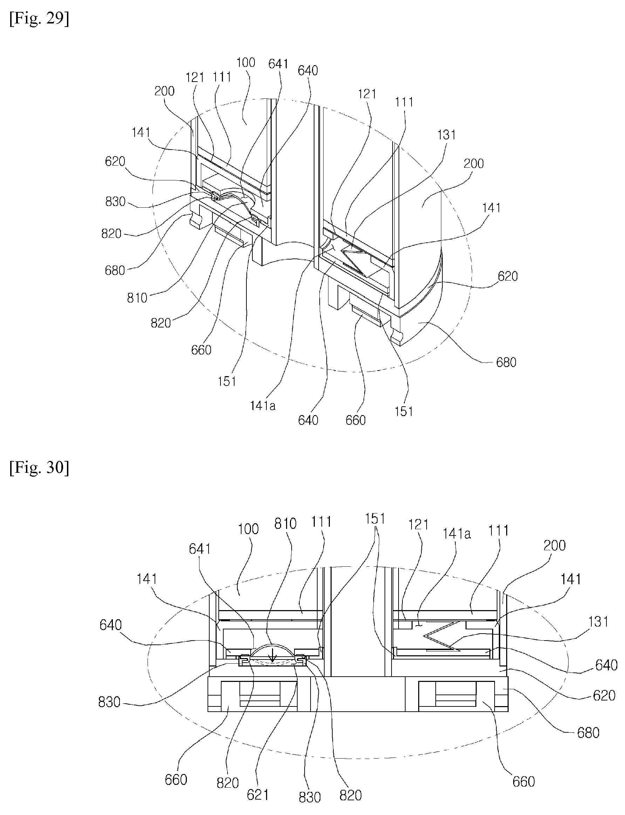

FIG. 29 is an enlarged view of a portion 'B' of FIG. 25, and FIG. 30 is an enlarged view of a portion 'B' of FIG. 26.

To achieve this, as illustrated in FIG. 29 and 30, a second tap plate 121 of a conductive material is coupled to the second plain portion 111 by welding, etc., and a second tap 131 of a conductive material is installed between the second tap plate 121 and the fourth lead plate 640. The second tap 131 is in contact with the second tap plate 121 and the fourth lead plate 640 to electrically connect the second plain portion 111 to the fourth lead plate 640.

However, the connection structure of the fourth lead plate 640 and the electrode assembly 100 is not limited to the structure described above. The connection structure may be variously modified such that the second tap 131 is in direct contact with the second plain portion 111.

Meanwhile, a second insulator 141 for insulating the second tap plate 121 and the outer container 200 from each other may be installed on a bottom surface of the second tap plate 121. In this case, an insertion hole 141 a is formed in the second insulator 141 such that the second tap 131 passes through the second insulator 141 so as to be in contact with the second tap plate 121.

In addition, a fourth gasket 151 for insulating the fourth cover 620 and the fourth lead plate 640 from each other may be installed between the fourth cover 620 and the fourth lead plate 640. The fourth gasket 151 may be formed of a material such as polypropylene. In this case, the fourth cover 620 and the fourth lead plate 640 are disposed to be opposite to each other with the fourth gasket 151 interposed therebetween.

The first and second short-circuit portions 700 and 800 are installed in first and second openings 631 and 641 formed in the third and fourth lead plates 630 and 640, respectively. When the internal pressure of the outer container 200 rises, the first and second short-circuit portions 700 and 800 are elastically transformed to come in contact with the third and fourth covers 610 and 620, respectively, thereby shorting the inside of the battery (see FIGS. 27 to 30).

In more detail, when the internal pressure of the battery rises by a gas generated by overcharging or an external impact, the first short-circuit portion 700 comes in contact with the third cover 610 to electrically connect the third lead plate 630, the third cover 610 and the outer container 200 to each other, and at the same time, the second short-circuit portion 800 comes in contact with the fourth cover 620 to electrically connect the fourth lead plate 640, the fourth cover 620 and the outer container 200 to each other.

The first short-circuit portion 700 includes a first elastic member 710 installed in the first opening 631 to seal the first opening 631, and a first connector 720 formed on a circumference portion of the first short-circuit portion 700 so as to be in contact with the third lead plate 630. The second short-circuit portion 800 includes a second elastic member 810 installed in the second opening 641 to seal the second opening 641, and a second connector 820 formed on a circumference portion of the second short-circuit portion 800 so as to be in contact with the fourth lead plate 640.

Here, the first and second elastic members 710 and 810 may have predetermined thicknesses and may have hemisphere shapes rounded toward the first and second plain portions 110 and 111. In this case, when the internal pressure of the battery is equal to or more than a predetermined value, the first and second elastic members 710 and 810 are reversed by the internal pressure in directions far away from the first and second plain portions 110 and 111 so as to come in contact with the third and fourth covers 610 and 620, respectively, as illustrated by dotted lines in FIGS. 28 and 30. The internal pressure of the battery, which reverses the first and second elastic members 710 and 810, may be changed by controlling the materials and thicknesses of the first and second elastic members 710 and 810.

On the other hand, the first short-circuit portion 700 may further include a third insulator 730, and the second short-circuit portion 800 may include a fourth insulator 830.

The third insulator 730 surrounds an outer circumference surface of the first connector 720 to insulate the third cover 610 and the first connector 720 from each other, and the fourth insulator 830 surrounds an outer circumference surface of the second connector 820 to insulate the fourth cover 620 and the second connector 820 from each other.

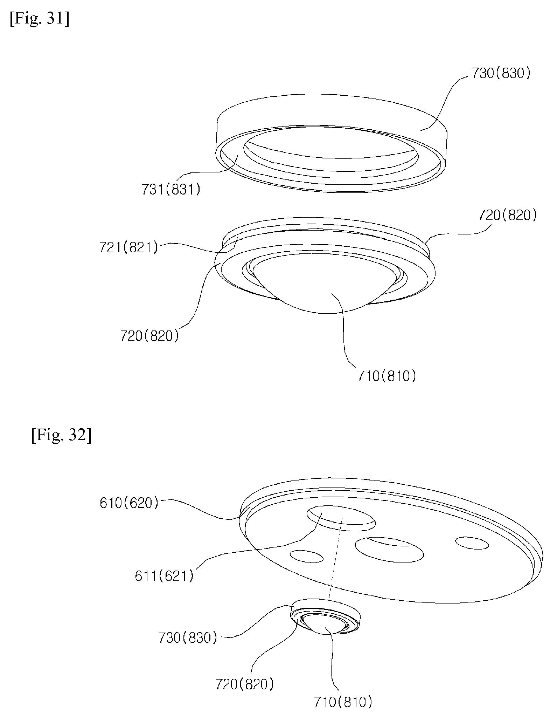

FIG. 31 is an exploded perspective view illustrating a first short-circuit portion and a second short-circuit portion according to the present invention.

To achieve this, as illustrated in FIG. 31, first and second protrusions 731 and 831 are formed on inner surfaces of the third and fourth insulators 730 and 830, respectively, and first and second joining grooves 721 and 821 are formed in the outer circumference surfaces of the first and second connectors 720 and 820, respectively. The first and second protrusions 731 and 831 are inserted into the first and second joining grooves 721 and 821, respectively.

In addition, the third insulator 730 is coupled to the third cover 610 such that the first short-circuit portion 700 is stably fixed between the third cover 610 and the third lead plate 630. The fourth insulator 830 is coupled to the fourth cover 620 such that the second short-circuit portion 800 is stably fixed between the fourth cover 620 and the fourth lead plate 640.

FIG. 32 is a perspective view illustrating first and second covers according to the present invention in more detail.

To achieve this, as illustrated in FIG. 32, first and second depressed regions 611 and 621 having predetermined depths are formed in the third and fourth covers 610 and 620, respectively. One-end portions of the third and fourth insulators 730 and 830 are inserted into the first and second depressed regions 611 and 621, respectively. In this case, when the first and second elastic members 710 and 810 are reversed by the internal pressure of the battery, the first and second elastic members 710 and 810 are in contact with central portions of the first and second depressed regions 611 and 621, respectively (see FIGS. 28 and 30).

The first and second connectors 720 and 820 may be bonded to the third and fourth lead plates 630 and 640 by welding to fix the first and second short-circuit portions 700 and 800. However, an additional welding process is required in this case, so this case is not preferable.

A reference numeral 650 not described is a first external terminal that is electrically connected to the third lead plate 630 to have positive polarity, and a reference numeral 660 not described is a second external terminal that is electrically connected to the fourth lead plate 640 to have negative polarity.

In addition, a reference numeral 670 not described is a gasket that is installed on a top surface of the third cover 610 to surround and insulate the first external terminal 650, and a reference numeral 680 not described is a gasket that is installed on a bottom surface of the fourth cover 620 to surround and insulate the second external terminal 660.

A process of generating an internal short circuit of the hollow core secondary battery according to the second embodiment of the present invention will be described as follows.

First, if the internal pressure of the battery gradually increases by the gas generated by the overcharging or the external impact, the internal pressure is transmitted to the first and second elastic members 710 and 810 through the first and second openings 631 and 641.

At this time, the first and second elastic members 710 and 810 maintain their shapes rounded toward the first and second plain portions 110 and 111, and then the shapes of the first and second elastic members 710 and 810 are reversed toward the third and fourth covers 610 and 620 so as to come in contact with the third and fourth covers 610 and 620, respectively, when the internal pressure is equal to or greater than a predetermined value.

When the first and second elastic members 710 and 810 are respectively in contact with the third and fourth covers 610 and 620 as described above, the first plain portion 110 is electrically connected to the outer container 200 by the first elastic member 710, and at the same time, the second plain portion 111 is electrically connected to the outer container 200 by the second elastic member 810. Thus, a path of a current flowing to the first and second external terminals 650 and 660 is changed to the outer container 200, so the short circuit of the current occurs.

While the present invention has been described with reference to exemplary embodiments, it will be apparent to those skilled in the art that various changes and modifications may be made without departing from the spirits and scopes of the present invention. Therefore, it should be understood that the above embodiments are not limiting, but illustrative. Thus, the scopes of the present invention are to be determined by the broadest permissible interpretation of the following claims and their equivalents, and shall not be restricted or limited by the foregoing description.

## Claims

1. A hollow core secondary battery comprising:
an electrode assembly comprising a pair of electrode plates and a separator disposed between the pair of electrode plates;
an outer container in which the electrode assembly is received;
an inner container inserted into a central portion of the electrode assembly, the inner container being hollow;
a first terminal assembly assembled at a top portion of the outer container, the first terminal assembly into which a top end portion of the inner container is inserted; and
a second terminal assembly assembled at a bottom portion of the outer container, the second terminal assembly having a central portion into which a bottom end portion of the inner container is inserted.

2. The hollow core secondary battery of claim 1, wherein the first terminal assembly comprises:
a first terminal portion;
a first gasket receiving the first terminal portion to insulate the first terminal portion;
a first cover disposed under the first gasket so as to be coupled to the outer container; and
a first lead plate electrically connected to a top surface of the electrode assembly,
wherein the second terminal assembly comprises:
a second terminal portion;
a second gasket receiving the second terminal portion to insulate the second terminal portion;
a second cover disposed on the second gasket so as to be coupled to the outer container; and
a second lead plate electrically connected to a bottom surface of the electrode assembly.

3. The hollow core secondary battery of claim 2, wherein the first terminal portion comprises:
a first terminal plate;
a first inner terminal formed on a top surface of the first terminal plate, the first inner terminal having a first hole into which the inner container is inserted;
a first outer terminal formed on an edge of the top surface of the first terminal plate to surround the first inner terminal; and
a first terminal tap formed on a bottom surface of the first terminal plate.

4. The hollow core secondary battery of claim 3, wherein the first gasket comprises:
a first gasket plate;
a first inner gasket formed on a top surface of the first gasket plate, the first inner gasket having a second hole connected to the first hole;
a first outer gasket formed on an edge of the top surface of the first gasket plate to surround the first inner gasket; and
a first terminal tap gasket formed on a bottom surface of the first gasket plate, the first terminal tap gasket surrounding and insulating the first terminal tap inserted in the first terminal tap gasket.

5. The hollow core secondary battery of claim 4, wherein the first cover comprises: a third hole connected to the second hole; and a first through-hole into which the first terminal tap is inserted.

6. The hollow core secondary battery of claim 5, wherein the first lead plate comprises:
a fourth hole connected to the third hole;
a second through-hole into which the first terminal tap is inserted; and
a first current-interrupting member of which a central portion is expanded upward by pressure so as to come in contact with the first cover when internal temperature and pressure of the hollow core secondary battery reach predetermined values.

7. The hollow core secondary battery of claim 6, wherein a first lower gasket for insulation is installed between the first cover and the first lead plate, and
wherein the first lower gasket comprises: a fifth hole connected to the third and fourth holes for the insertion of the inner container; a third through-hole into which the first terminal tap is inserted; and a first insertion hole through which the central portion of the first current-interrupting member expanded upward by the pressure passes.

8. The hollow core secondary battery of claim 2, wherein the second terminal portion comprises:
a second terminal plate;
a second inner terminal formed on a top surface of the second terminal plate, the second inner terminal having a sixth hole into which the inner container is inserted;
a second outer terminal formed on an edge of the top surface of the second terminal plate to surround the second inner terminal; and
a second terminal tap formed between the second inner terminal and the second outer terminal so as to be electrically connected to the electrode assembly.

9. The hollow core secondary battery of claim 8, wherein the second gasket comprises:
a second gasket plate;
a second inner gasket formed on a bottom surface of the second gasket plate, the second inner gasket having a seventh hole connected to the sixth hole;
a second outer gasket formed on an edge of the bottom surface of the second gasket plate to surround the second inner gasket;
a joining portion formed to protrude from the bottom surface of the second gasket plate between the second inner gasket and the second outer gasket, the joining portion inserted into between the second inner terminal and the second outer terminal when a plurality of the hollow core secondary batteries are connected in series to each other; and
a second terminal tap gasket formed to extend from a top surface of the second gasket plate, the second terminal tap gasket having a hollow structure having opened top and bottom ends in such a way that the second terminal tap is inserted into the second terminal tap gasket.

10. The hollow core secondary battery of claim 9, wherein the second cover is disposed on the second gasket, and
wherein the second cover comprises: an eighth hole connected to the seventh hole; and a fourth through-hole into which the second terminal tap is inserted.

11. The hollow core secondary battery of claim 10, wherein the second lead plate comprises:
a ninth hole connected to the eighth hole;
a fifth through-hole into which the second terminal tap is inserted; and
a second current-interrupting member of which a central portion is expanded downward by pressure so as to come in contact with the second cover when internal temperature and pressure of the hollow core secondary battery reach predetermined values.

12. The hollow core secondary battery of claim 11, wherein a second lower gasket for insulation is installed between the second cover and the second lead plate, and
wherein the second lower gasket comprises: a tenth hole connected to the eighth and ninth holes for the insertion of the inner container; a sixth through-hole into which the second terminal tap is inserted; and a second insertion hole through which the central portion of the second current-interrupting member expanded downward by the pressure passes.

13. The hollow core secondary battery of claim 2, further comprising:
first and second insulation boards on top and bottom surfaces of the electrode assembly,
wherein the first and second insulation boards comprise:
first and second insulation-board plates;
first and second insulation-board through-holes formed in central portions of the first and second insulation-board plates, the inner container inserted into the first and second insulation-board through-holes;
first and second receiving portions extending from outer circumferences of one-sides of the first and second insulation-board plates to receive the first and second terminal assemblies; and
third and fourth receiving portions extending from outer circumferences of another-sides of the first and second insulation-board plates to receive an upper portion and a lower portion of the electrode assembly.

14. A hollow core secondary battery comprising:
an electrode assembly comprising a pair of electrode plates and a separator disposed between the pair of electrode plates;
an outer container in which the electrode assembly is received;
third and fourth covers coupled to one side and another side of the outer container, respectively;
a third lead plate installed between one side of the electrode assembly and the third cover so as to be electrically connected to the electrode assembly;
a fourth lead plate installed between another side of the electrode assembly and the fourth cover so as to be electrically connected to the electrode assembly; and
first and second short-circuit portions installed in first and second openings formed in the third and fourth lead plates, respectively, the first and second short-circuit portions elastically transformed to come in contact with the third and fourth covers, respectively, when internal pressure of the outer container rises.

15. The hollow core secondary battery of claim 14, wherein the first short-circuit portion comprises: a first elastic member installed in the first opening to seal the first opening; and a first connector formed on a circumference portion of the first short-circuit portion so as to be in contact with the third lead plate, and
wherein the second short-circuit portion comprises: a second elastic member installed in the second opening to seal the second opening; and a second connector formed on a circumference portion of the second short-circuit portion so as to be in contact with the fourth lead plate.

16. The hollow core secondary battery of claim 15, wherein central portions of the first and second elastic members are reversed to have hemisphere shapes being in contact with the third and fourth covers, respectively, when internal pressure of the battery increases.

17. The hollow core secondary battery of claim 15, wherein the first short-circuit portion further comprises: a third insulator surrounding an outer circumference surface of the first connector to insulate the third cover and the first connector from each other, and
wherein the second short-circuit portion further comprises: a fourth insulator surrounding an outer circumference surface of the second connector to insulate the fourth cover and the second connector from each other.

18. The hollow core secondary battery of claim 17, wherein first and second protrusions are formed on inner surfaces of the third and fourth insulators, respectively, and
wherein first and second joining grooves, into which the first and second protrusions are inserted, respectively, are formed in outer circumference surfaces of the first and second connectors.

19. The hollow core secondary battery of claim 17, wherein first and second depressed regions having predetermined depths are formed in the third and fourth covers, respectively, and
wherein one-end portions of the third and fourth insulators are inserted into the first and second depressed regions, respectively.

20. The hollow core secondary battery of claim 14, wherein first and second plain portions, each of which has positive polarity or negative polarity, are formed on both ends of the electrode assembly, respectively,
wherein first and second tap plates of a conductive material are coupled to the first and second plain portions, respectively, and
wherein the third and fourth lead plates are connected to the first and second tap plates, respectively.

21. The hollow core secondary battery of claim 20, wherein a first tap of a conductive material is installed between the first tap plate and the third lead plate so as to be in contact with the first tap plate and the third lead plate, and
wherein a second tap of a conductive material is installed between the second tap plate and the fourth lead plate so as to be in contact with the second tap plate and the fourth lead plate.

22. The hollow core secondary battery of claim 21, wherein first and second insulators are installed on a top surface of the first tap plate and a bottom surface of the second tap plate, respectively, and
wherein insertion holes are respectively formed in the first and second insulators such that the first and second taps are in contact with the first and second tap plates.
